# EUROPEAN PATENT SPECIFICATION

(11) **EP 2 835 466 B1**
(45) Date of publication and mention of the grant of the patent: **18.09.2019**
(21) Application number: 13179991.8
(22) Date of filing: 09.08.2013
(51) Int. Cl.: D06P 5/30, B41M 5/00, C09D 179/02, D06P 3/79, D06P 5/22, D06M 15/37, D06P 1/52, C11D 3/00, D06M 101/16

(54) **Dye-Receiving Material and Uses Thereof**
Farbstoffempfangsmaterial und Verwendungen dafür
Matériau de réception de colorant et leurs utilisations

(43) Date of publication of application: 11.02.2015
(73) Proprietor: Ahlstrom-Munksjö Oyj, 00100 Helsinki (FI)
(72) Inventor: Fantini, Diego, 10133 Turin (IT); Merlet, Samuel, 38410 Vaulnaveys-le-haut (FR); Dufour, Menno, 69007 Lyon (FR)
(74) Representative: Hoffmann Eitle

(56) References cited:
- US-A- 4 171 404
- US-A1- 2003 118 730
- US-A1- 2003 139 320
- US-A1- 2004 166 753
- US-B1- 6 248 432

## Description

### Technical Field

The present invention relates to a dye-receiving material that exhibits a remarkable ability to retain dyes, despite being based upon materials that have been traditionally associated with poor dye retention. The present invention further relates to an efficient process of producing the dye-receiving material and exemplary uses of the material.

### Background Art

Coloring everyday items is generally desirable since it can be used to improve the aesthetics of the item or to add useful information such as words, symbols, warning signs and so forth. There are a great many ways in which color can be added to items, such as by dyeing and printing. However, not all materials are amenable to dyeing and/or printing, which presents a significant problem to people and businesses wishing to color items made from such materials.

Synthetic materials in the form of fibers are a particularly important example of this problem because they are ubiquitous in the modern world, and yet they are not particularly amenable to dyeing and/or printing. The ubiquity of synthetic fibers is founded upon the many useful properties that stem from their chemical structure, such as the ability to form lightweight, flexible materials that have good stain resistance, low moisture absorption, good resistance to degradation by chemicals, facile production and can be obtained from low-cost raw materials. However, the chemical structure that provides these many useful properties is also a fundamental reason why it can be difficult to add color to articles formed from these materials. In particular, synthetic materials can be hydrophobic, chemically inert, non-porous and/or have low surface energies, and therefore tend to repel hydrophilic dyes and colorants. This problem is particularly significant in relation to so-called acid dyes because they tend to be highly hydrophilic due to the presence of anionic groups. Moreover, these types of dyes are particularly important to the coloring industry because they are believed to account for around 15% of the global dye market in terms of global annual production.

Despite the difficulty in coloring synthetic materials such as synthetic fibers, a certain amount of progress has been made. For example, polypropylene, a notoriously hydrophobic material, can be dyed in bulk during manufacture by mixing a colorant, such as a dye or pigment, with the synthetic polymer when in its molten state prior to spinning. However, whilst this procedure can be used to produce colored synthetic fibers, it is in essence an industrial-scale process that requires industrial-scale equipment and, therefore, industrial-scale capital investment. Moreover, this type of process is directed to large-scale production, which makes it difficult for users interested in small-scale production to acquire materials made from synthetic fibers that have their desired color(s) and/or pattern.

It is also possible to color synthetic materials by printing, but the surface intended for printing must first be activated in order to impart some degree of hydrophilicity. One method is the so-called corona treatment, which entails using a low temperature corona discharge plasma to chemically modify the surface. However, this technique requires specialized equipment, such as a high-frequency power generator and a high-voltage transformer, and is therefore out of reach for many would-be users. Moreover, the corona treatment tends to diminish over time, and so a further treatment becomes necessary in order to 'top up' the effect.

As will be appreciated from the above, a number of problems remain unsolved in this technical field despite the advances discussed in the preceding paragraphs. In particular, there remains a need for a versatile way of coloring synthetic fibrous materials that does not require specialized industrial-scale equipment and can be used in a straightforward way by all potential users, from large industrial operations through to small- and medium-sized enterprises (SMEs) and individuals with a need for this technology, but who do not have the benefit of a manufacturing plant. It would also be highly beneficial if the means for solving this problem could be obtained using a cost-effective, rapid and efficient process that avoids hazardous chemicals. These and others needs are addressed by the present invention.

### Summary of the Invention

In particular, the present invention addresses these needs by providing a dye-receiving material comprising:
a support containing synthetic fibers; and
a three-dimensional network entangled with at least some of the fibers contained in the support, the three-dimensional network comprising a first polymer that is cross-linked by a second polymer; wherein:
   the first polymer is a polyamine comprising primary amine groups, the first polymer being cationic and water soluble; and
   the second polymer is a water soluble polymer that is different from the first polymer, the second polymer containing repeating units comprising halohydrin and/or epoxide groups that are capable of forming covalent cross-links with the primary amine groups of the first polymer

This material overcomes the difficulty in adhering dye compounds to synthetic fibers by providing the material with the means by which the dye compounds can be captured and retained. In particular, the three-dimensional network mentioned above is capable of forming strong intermolecular interactions with dye molecules so that each dye molecule is firstly captured, and then secondly held firmly in place. As the three-dimensional network is itself held firmly in place by virtue of being entangled with the support fibers, the captured dye molecules are firmly adhered to the dye-receiving material. The strong adherence ensures that the color is retained by the material for a long period of time, even if the material is placed under mechanical stress, such as rubbing, or if it is placed in water.

Moreover, since the three-dimensional network is held in place by entanglement with the numerous support fibers, there is no express need for a chemical bond between the support fibers and the polymers in the three-dimensional network. This is a key advantage of the present invention because it means that chemically inert synthetic fibers, such as polypropylene or polyethylene, can be readily incorporated in the material, and can therefore be readily colored using everyday coloring techniques, such as dyeing, inkjet printing and so forth. This is in marked contrast to the prior art, which colors inert materials like polypropylene only on an industrial scale. It is therefore envisaged that the present invention will be particularly useful to individual users and SMEs, who would not ordinarily have access to industrial scale facilities.

As will be explained below, a further advantage of this unique material is that it can be readily produced in an efficient, cost-effective and environmentally friendly manner.

### Figures

- Figure 1A:: Dye treatment of untreated (comparative) polypropylene before washing.
- Figure 1B:: Dye treatment of the treated (inventive) polypropylene before washing.
- Figure 1C:: Dye treatment of untreated (comparative) polypropylene after washing.
- Figure 1D:: Dye treatment of the treated (inventive) polypropylene after washing.
- Figure 2A:: Inkjet printing of untreated (comparative) polypropylene before washing.
- Figure 2B:: Inkjet printing of the treated (inventive) polypropylene before washing.
- Figure 2C:: Inkjet printing of untreated (comparative) polypropylene after washing.
- Figure 2D:: Inkjet printing of the treated (inventive) polypropylene after washing.

Figure 3: Schematic illustration of the three-dimensional network entangling with a support fiber, wherein: the first polymer 1 and the second polymer 2 are mixed in Figure 3A; the mixed first and second polymers are impregnated around the support fiber 3 in Figure 3B; and the second polymer cross-links the first polymer in Figure 3C by reacting with the amine groups 1a of the first polymer.

### Description

### Definitions

Average molecular weight: unless stated otherwise, 'average molecular weight' denotes number average molecular weight.

Average: unless stated otherwise, the term 'average' denotes mean average.

Weight/Mass: references to amounts 'by weight' are intended to be synonymous with 'by mass'; these terms are used interchangeably.

Polymer: a compound comprising upwards of ten repeating units such as, for example, a homopolymer, a copolymer, a graft copolymer, a branch copolymer or a block copolymer.

### Components of the Dve-Receiving Material

As mentioned above, the dye-receiving material of the present invention comprises a support containing synthetic fibers, a first polymer and a second polymer. These and other features of the present invention are discussed in detail in the following sections.

### Fiber-Containing Support

The dye-receiving material comprises a synthetic fiber-containing support about which the three-dimensional network of first and second polymers is formed. The type, nature and size of the support are not particularly limited, which is advantageous in terms of versatility. An important aspect of the present invention is that the support fibers do not need to chemically bond to either the first or second polymers. Instead, the three-dimensional network is held in place by being entangled between and around the numerous fibers of the support in the form of a complicated matrix of fibers and polymer chains. This is beneficial because a wide variety of support fibers can be used. In particular, chemically inert fibers, such as polypropylene, can be used in the support. In addition, and as mentioned above, the present invention is particularly useful when the synthetic fibers of the support are hydrophobic, since these types of fibers are ordinarily particularly difficult to color using hydrophilic dyes. Particularly preferable hydrophobic support fibers as those comprising, or consisting of, polypropylene, polyethylene or mixtures thereof.

By synthetic fibers, it is meant a fiber, or filament, comprising a glass or an artificial polymer obtainable by polymerizing one or more monomers. Preferably, though, the synthetic fibers comprise an artificial polymer obtainable by polymerizing one or more monomers. Examples of suitable artificial polymers in the synthetic fibers include polyesters, polyamides, polyvinyl polymers such as poly(meth)acrylic acid derivatives, poly(meth)acrylamides and polyacrylonitriles, and polyalkenes. Of these, polyalkenes such as polyethylene, polypropylene and polybutylene and mixtures thereof are particularly preferable, wherein polypropylene and/or copolymers of polypropylene are generally the most preferable. The synthetic fibers can optionally include natural material, such as cellulose, in addition to the synthetic material. The amount of natural material in the synthetic fibers, if present, is preferably ≤ 5 % by mass of the total mass of the synthetic fibers. Preferably, though, the synthetic fibers do not contain any natural material.

The support can also include natural fibers in addition to the synthetic fibers, wherein the maximum amount of natural fibers is preferably ≤ 33 % by mass, more preferably ≤ 15 % by mass, more preferably ≤ 5 % by mass of the fiber-containing support.

There is no particular limitation on the diameters and lengths of the fibers incorporated in the support, partly because the three-dimensional network adapts to the shape of the fibers prior to cross-link formation. Instead, the diameters and lengths can be determined by the user based upon their knowledge of their art and depending upon the intended end use.

There is no particular limitation regarding the type of fibrous substrate that can be used for the invention, but suitable substrate can be a woven, knitted or nonwoven material. Preferred substrates are synthetic polyolefin spunbond or meltblown nonwovens or combination of thereof.

Spunbond refers to a material formed by extruding molten thermoplastic material as filaments from a plurality of fine capillary spinnerets with the diameter of the extruded filaments then being rapidly reduced as described in, for example, in US-4,340,563 US-3,692,618, US-3,802,817, US-3,338,992, US-3,341,394, US-3,502,763 and US-3,542,615. The shape of the spinnerets is not particularly limited, though it is usually circular. Spunbond fibers are generally not tacky when they are deposited onto a collecting surface. Spunbond fibers are generally continuous and have average diameters larger than 7 microns, more particularly, between about 10 and 20 microns.

Meltblown refers to a material formed by extruding a molten thermoplastic material through a plurality of fine capillary spinnerets as molten threads or filaments into converging high velocity, usually hot, gas (e.g. air) streams which attenuate the filaments of molten thermoplastic material to reduce their diameter. The shape of the capillary spinnerets is not particularly limited, though they are usually circular. Thereafter, the meltblown fibers are carried by the high velocity gas stream and are deposited on a collecting surface to form a web of randomly dispersed meltblown fibers. Such a process is disclosed in, for example, US-3,849,241. Meltblown fibers are microfibers which may be continuous or discontinuous, are generally smaller than 10 microns in average diameter, and are generally tacky when deposited onto a collecting surface.

A combination of spunbond and meltblown materials can be a laminate in which some of the layers are spunbond and some are meltblown such as a spunbond/meltblown/spunbond (SMS) laminate and others, as disclosed in US-4,041,203, US-5,169,706, US-5,145,727, US-5,178,931 and US-5,188,885.

Spunbond or meltblown can be made from polypropylene, polyester, polyethylene, polyamide, or combinations thereof.

Spunbond can also be made of multi-component fibers. The multi-component fibers may be formed by methods, such as those described in US-6,074,590. Generally, multi-component fibers are formed by co-extrusion of at least two different components into one fiber or filament. The resulting fiber includes at least two different essentially continuous polymer phases. In one non-limiting embodiment, the multi-component fibers include bicomponent fibers. Such multi-component spunbond fibers are particularly useful as heatsealable material.

Another preferred nonwoven substrate is a drylaid carded nonwoven consolidated either chemically, thermally or by mechanical entanglements. Examples of nonwoven with mechanical entanglements are needlepunched or spunlaced nonwovens that are created by mechanically orienting and interlocking the fibers of a carded web. Useful ways to obtain such nonwovens are disclosed in US-5,928,973, US-5,895,623, US-5,009,747, US-4,154,889, US-3,473,205. The staple fibers are generally short fibers, such as in cotton, having a length of about 35 to 80 mm, or they can be short cut synthetic fibers having a length of about 35 to 80 mm, and size from about 1 to 30 decitex.

Another preferred nonwoven substrate is a wetlaid nonwoven. Wetlaid nonwovens are produced in a process similar to paper making. The nonwoven web is produced by filtering an aqueous suspension of fiber onto a screen conveyor belt or perforated drum. Additional water is then squeezed out of the web and the remaining water is removed by drying. Bonding may be completed during drying or a bonding agent, e.g. an adhesive, may be subsequently added to the dried web and the web is then cured. Techniques for wetlaying fibrous material are well known in the art as described in EP-A-0 889 151. Fibers used in wetlaying processes typically have a length from about 5 to 38mm and a size from 0.5 to 17 decitex.

There is no particular limitation regarding the physical shape or size of the support. Instead, the support can take any form that is suitable to the user's needs, wherein this versatility is a further benefit of the present invention.

### First Polymer

The first polymer is a polyamine, which is to say that it is a polymer comprising repeating units that have amine groups. The person skilled in the field would therefore appreciate that a polymeric polyamine will contain a large number of amine groups, such as polymers containing upwards of 50 amine groups. For example, the first polymer can be a polymer in which all repeating units possess an amine group, such as a homopolymer of one amine-containing repeating unit, or a copolymer of plural repeating units each possessing an amine group. Alternatively, the first polymer can be a copolymer possessing amine groups in only some of its repeating units. Copolymers representing the first polymer can be a random copolymer, block copolymer or graft copolymer, for example.

The amine groups present in the first polymer can be primary amines, secondary amines, tertiary amine and/or quaternary ammonium groups, provided that at least some primary amine groups are present in the first polymer in isolation. Different repeating units of the first polymer can have different amines.

The term 'amine' takes on its usual meaning of being a derivative of ammonia in which one, two or three of the ammonia hydrogen atoms has been replaced by a substituent, such as an alkyl group. In the special case of a quaternary ammonium group, the three hydrogen atoms are replaced by four substituents, thereby resulting in a cationic tetravalent nitrogen atom. Needless to say, the term amine does not encompass groups that the skilled person would recognize as separate functional groups. For example, those skilled in this field will appreciate that amides, nitriles, sulfonamides, urethanes and so forth are not amines, and so polyvinylformamides, poly(meth)acrylamides, poly(meth)acrylonitriles, polyamides, polyvinylsulfonamides and so forth are not examples of the first polymer. On the other hand, the first polymer can include repeating units stemming from monomers that would ordinarily form these non-amine polymers, such as vinylformamide, (meth)acrylamide, acrylonitrile, vinylsulfonamide and so forth, because the first polymer can include non-amine repeating units as mentioned above, provided that the polymer has the mandatory primary amine groups.

Without wishing to be bound by theory, it is believed that the amine groups serve at least two purposes. On the one hand, the amine groups (in the case of the primary and second amine groups) can form covalent cross-links with the second polymer, thereby aiding the formation of the three-dimensional network. On the other hand, amine groups are also highly useful groups in terms of capturing and retaining dye compounds, as will be discussed below. A multitude of amine groups in the first polymer is therefore necessary so that covalent bonds can be formed with the second polymer whilst ensuring that amine groups remain available to aid the capture of dye compounds.

Both primary (R-NH₂) and secondary (R-NH-R') amine groups - with R and R' representing a carbon covalent bond - can react with the halohydrin and/or epoxide group of the second polymer to form covalent bonds. Primary amine group can react with two reactive groups of the second polymer, forming two covalent bonds, since a primary amine group has two labile hydrogens. Secondary amines have one labile hydrogen and can thus form only one covalent bond by reacting with the second polymer. Hence the potential reactivity between functional groups can be defined in terms of the number of labile hydrogen atoms on the nitrogen atom of the amino group (i.e. the number of reactive N-H functional groups). In other words, the number of reactive N-H functional groups corresponds to the number of possible covalent bond that can form the amino groups. The number of moles of (N-H) functional groups can be calculated as follows: the number of moles of (N-H) functional groups is equal to the number of moles of secondary amine group + two times the number of moles of primary amine groups.

The first polymer is water soluble, wherein the water solubility of the first polymer is preferably ≥ 10 g/liter at 25°C, more preferably ≥ 40 g/liter at 25°C. The water solubility of the first polymer assists dye-capture and retention because water-solubility implies hydrophilicity, which aids the retention of hydrophilic dyes. Water solubility also aids the production of the dye-receiving material because the first polymer is conveniently handled in the form of an aqueous solution. Moreover, the resulting three-dimensional network tends to have a better structure when the first polymer is water soluble because, when placed in water, the water soluble polymer chains will tend to exist (by virtue of the swelling phenomenon) with a more open, elongated tertiary structure than polymer chains that are not water soluble, or only sparingly water soluble. The 'open' tertiary structure of the polymer chains is helpful because it means that the individual polymer chains are more likely to intertwine with the individual chains of the second polymer and the fibers of the support, thereby promoting the necessary entanglement. In contrast, impregnating the support with first polymer chains that have a closed, ball-like tertiary structure will not promote entanglement.

The first polymer is cationic, which is to say that it bears an overall positive charge in an aqueous medium at all pH values of from 6 to 9. The cationic character can stem from groups that have a positive charge irrespective of pH, such as a quaternary ammonium group, and/or it can stem from groups that do not have a permanent positive charge, but that do have a positive charge under the above conditions. For example, the mandatory primary amine groups of the first polymer can serve as the cationic group because primary amines tend to be protonated at a pH of 6-9. Positively charged groups are helpful for a number of reasons. In particular, the positively charged regions of the first polymer help to electrostatically capture dye compounds.

Examples of the first polymer include poly(allyl amine)s, poly(ethylene imine)s, partially hydrolyzed poly(vinylformamide)s, polyvinylamines, polyvinylamides, chitosan and copolymers of these polyamines with any other type of monomers.

The average molecular weight of the first polymer in isolation can be at least 20,000, preferably higher than 100,000, wherein higher molecular weight polymers tend to improve both the structural strength of the dye-receiving material and its ability to retain dyes. The upper limit of the average molecular weight of the first polymer is not particularly limited, but is generally less than 5,000,000, preferably less than 1,000,000. First polymers having an average molecular weight below these values are preferable because aqueous solutions of these polymers are generally easier to handle, as they are not overly viscous.

The first polymer can also comprise side-chains having quaternary ammonium groups. Adding side-chains that possess such cationic groups can be helpful because they augment the effects explained above regarding the general cationic groups of the first polymer. For example, side-chain quaternary ammonium groups can be obtained by conducting a graft-type reaction on the first polymer using glicidyl trimethylammonium chloride, 3-chloro-2-hydroxypropyl trimethylammonium chloride or a mixture thereof as grafting reactants. For example, these groups can be bonded to amine groups of the first polymer, provided that sufficient amine groups remain for cross-linking and for also capturing dyes. Generally speaking, it is preferable that less than 30 % of amine groups of the first polymer are bonded to side-chains having quaternary ammonium groups. This helps to retain a large number of uncapped amine groups for cross-linking and also helps to ensure that the viscosity of the first polymer does not increase to the extent that it is inconvenient to handle when producing the dye-receiving material.

Further details regarding the first polymer are provided below in the passages dealing with the dye-receiving material as a whole.

### Second Polymer

The second polymer is a water soluble polymer that is able to cross-link chains of the first polymer by forming covalent cross-links, which contributes to the structural integrity and insolubility of the three-dimensional network. These properties, in turn, contribute to the longevity of the three-dimensional network, both before and after being colored by the addition of one or more dye compounds. Before the addition of dye compounds, the longevity of the three-dimensional network is manifested in terms of a long shelf-life, for example, because the three-dimensional network will not deteriorate over time. The dye-receiving material will therefore perform adequately even after being stored for a prolonged period of time.

After the addition of dye compounds, the longevity of the three-dimensional network means, for example, that the appearance of the colored regions of the material will be maintained for longer, since the three-dimensional network of first and second polymers will not break down under the action of mechanical stress, thermal stress and so forth. For example, one result of this structural integrity is that the three-dimensional network will not break down when stress is applied by mechanical rubbing, for instance. The extent to which the color adheres to the material can be measured in accordance with ASTM D5264-98(2011), for example.

The second polymer is able to form the necessary covalent cross-links because it contains halohydrin and/or epoxide groups. Halohydrin groups are characterized by the presence of a hydroxyl group and a halogen functional group on adjacent carbon atoms. The halogen can be any of fluorine, chlorine, bromine and iodine, for example. Chlorohydrin groups are particularly useful halohydrins within the scope of the present invention because they are readily obtainable and readily form cross-links with the first polymer. For example, the chlorohydrin illustrated in the following Formula (I) can be used in the dye-receiving material of the present invention: 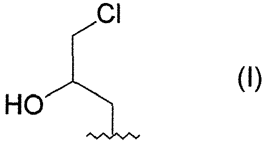 wherein the zig-zag line indicates the point at which this chlorohydrin group is joined to the second polymer.

The mechanism by which the halohydrin groups, such as the one illustrated in Formula (I), form covalent cross-links with the first polymer is not particularly limited. In one mechanism, the halogen atom can be displaced by reaction with a nucleophilic group of the first polymer. In a related mechanism, the halohydrin groups can form an intermediate epoxide group via intramolecular nucleophilic attack by the hydroxyl group of the halohydrin group on the halogen group, and the newly-formed epoxide group can then react with nucleophilic groups of the first polymer.

Epoxide groups are characterized by the presence of a three-membered cyclic ether. As a result of the ring-strain within the epoxide ring, epoxide groups tend to be more reactive than other cyclic ethers, which aids the formation of cross-links. For example, this ring strain can render the epoxide ring more labile towards nucleophilic attack from nucleophilic groups of the first polymer.

Whereas the first polymer can be characterized by the average number of N-H functional groups in its polymer chains, the second polymer can be characterized by the average number of halohydrin and/or epoxide functional groups.

The average molecular weight of the second polymer in isolation is not particularly limited. However, it is helpful if the average molecular weight is at least 1,000, preferably higher than 20,000, as this improves the structural integrity of the three-dimensional network within the dye-receiving material. Structural integrity can be manifested in terms of the tensile strength of the dye-receiving material. It is also helpful if the average molecular weight is lower than 5,000,000, preferably less than 1,000,000. Second polymers having an average molecular weight below these values are preferable because aqueous solutions of these polymers are generally easier to handle, as they are not overly viscous.

The second polymer is water soluble, wherein the water solubility of the second polymer is preferably ≥ 1 g/liter at 25°C, more preferably at least 3 g/liter at 25°C. The water solubility of the second polymer aids the production of the dye-receiving material because it is conveniently handled in the form of an aqueous solution. Moreover, the resulting three-dimensional network tends to have a better structure when the second polymer is water soluble because, when placed in water, the water soluble polymer chains will tend to exist (by virtue of the swelling phenomenon) with a more open, elongate tertiary structure than polymer chains that are not water soluble, or only sparingly water soluble. The open tertiary structure of the polymer chains is helpful because it means that the individual polymer chains are more likely to intertwine with the individual chains of the first polymer and the fibers of the support, thereby promoting the necessary entanglement of the various fibers and polymer chains present. In contrast, impregnating the support with second polymer chains that have a closed, ball-like tertiary structure will not aid entanglement. The mutual water solubility of both the first and second polymers is also helpful because the polymers will form favorable intermolecular interactions, which further promotes close intertwining and aids cross-linking.

The type of polymer used as the second polymer is not particularly limited, provided that it possesses the necessary halohydrin and/or epoxide groups. This versatility of the second polymer is yet another advantage associated with the present invention. Moreover, epoxide and/or halohydrin groups can be added to a pre-made polymer in a straightforward manner, which provides convenient access to a multitude of alternatives within the scope of the second polymer. For example, the halohydrin illustrated in Formula (I) above can be readily formed by reacting a polymer containing nucleophilic groups with epichlorohydrin.

Suitable types of polymers for use as the basis of the second polymer include polyamides, polyalkanolamines, polyamines fully reacted with halogen compounds such as epichlorohydrin, modified polydiallyldimethylammonium chloride polyamines, polyalkenes, polyalkylene oxides, polyesters, poly(meth)acrylic acids and copolymers thereof. For example, the second polymer can be a polyamide, polyvinylamine or polyallylamine (or copolymer thereof) that possess epoxide and/or halohydrin groups.

The second polymer can also comprise quaternary ammonium groups, which help to capture dye compounds. Such quaternary ammonium groups can, for example, be present in the polymer backbone, in the repeating units and/or in side-chains. The quaternary ammonium groups can be present in the same polymer chain as either the halohydrin groups or the epoxide groups mentioned above, or both the halohydrin groups and the epoxide groups; there is no particular limit in this regard. By way of an example, the second polymer can be a diallyl(3-chloro-2-hydroxypropyl)amine hydrochloride-diallyldimethylammonium chloride copolymer having the repeating units illustrated in following Formula (II): 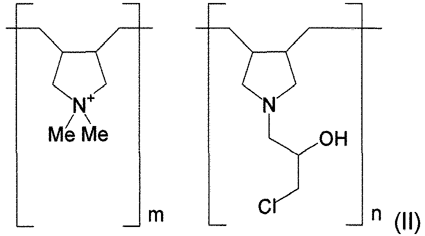 wherein the ratio of m:n in the polymer is in the range of from 1:9 to 9:1, preferably from 4:6 to 6:4. The average molecular weight is preferably higher than 1,000, more preferably higher than 20,000, and the average molecular weight is preferably lower than 5,000,000, more preferably lower than 1,000,000.

Further details regarding the second polymer are provided below in the passages dealing with the dye-receiving material as a whole.

### Further Components

In addition to the support fibers, first polymer and second polymer, the dye-receiving material can include further components as desired by the user. For example, the user might choose to add a binder in order to aid structural integrity. Examples of binders include acrylics, vinyl esters, vinyl chloride alkene polymers and copolymers, styrene-acrylic copolymers, styrene-butadiene copolymer, urethane polymers, and copolymers thereof, wherein vinyl acetate and/or ethylene vinyl acetate copolymers are particularly useful. Preferably said binder is a self-cross-linkable binder, e.g. with pendant cross-linking functionalities. Preferably the binder is hydrophilic. The binder can also contain starch or polyvinyl alcohol. The amount of binder present, if desired by the user, can be generally in the range of from 5 to 50 g/m² of the surface of the dye-receiving material. However, the present invention does not explicitly require a binder because the entangled support fibers and three-dimensional network surprisingly provide significant structural strength. This represents yet a further significant benefit of the present invention.

The dye-receiving material can, of course, include further components, as and when required by the user. For example, non-limiting examples of optional components that can be found in the dye-receiving material include antistatic agents, fluoro-compounds, alcohol repellents, absorbents, mineral fillers, antimicrobial agents, chelating agents and combinations thereof.

### Dye-Receiving Material

As mentioned above, the present invention is directed to a dye-receiving material comprising a fiber-containing support and a three-dimensional network of first and second polymers entangled with at least some of the fibers contained in the support, wherein the first polymer is cross-linked by the second polymer.

The mass ratio of the first polymer to the second polymer can be in the range of from 99:1 to 20:80, preferably from 97:3 to 50:50. This ratio helps to provide the three-dimensional network with structural strength and insolubility whilst retaining good dye-capture and dye-retention properties. However, it can be more helpful to define the relative amounts of the two polymers by their respective average molecular amounts of reactive functional groups, i.e. reactive (N-H) functional groups for the first polymer, and halohydrin and/or epoxide groups in the second polymer. It can be advantageous that the first and second polymers are present in relative amounts such that the ratio of the halohydrin and/or epoxide groups in the second polymer to the (N-H) functional groups in the first polymer is in the range of from 0.0035 to 0.0380. Without wishing to be bound by theory, it is believed that this ratio is preferential because the resulting three-dimensional network will have high strength, very low water-solubility and a high degree of dye-retention.

In another embodiment, the molecular ratio of the halohydrin and/or epoxide groups in the second polymer to the (N-H) functional groups in the first polymer is in the range of 0.0035 to 1.0000 when the second polymer also contains quaternary ammonium groups as described earlier, more preferably in the case where the second polymer has the formula (II). Without wishing to be bound by theory, it is believed that the range of ratios for this embodiment can be broader than the range of ratios in the previous paragraph because the second polymer in this embodiment contains quaternary ammonium groups that can contribute to retaining dye compounds.

When the dye-receiving material is provided in the form of a sheet, the three-dimensional network can have a basis weight of from 0.5 to 30.0 g/m², more preferably from 1.0 to 20.0 g/m². For the avoidance of doubt, these ranges are based upon the area of one side face of the sheet.

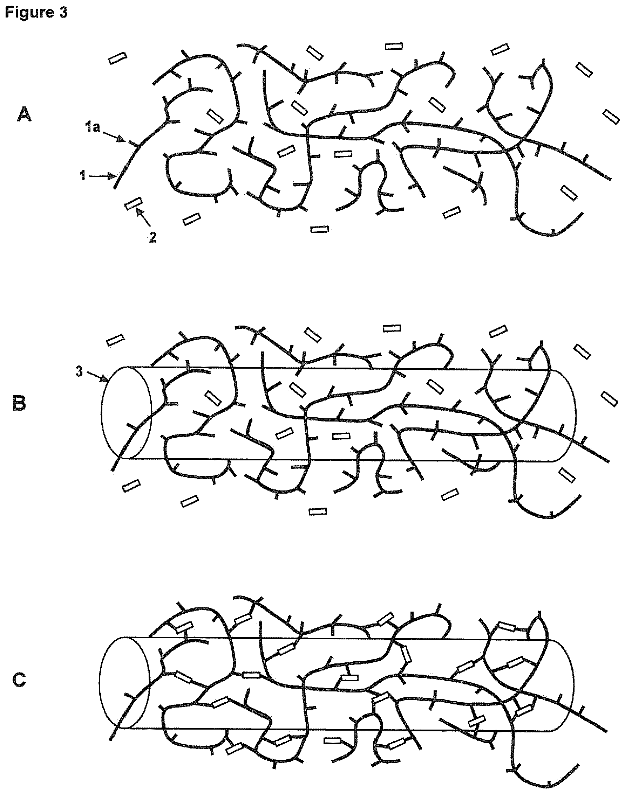

As mentioned above, the dye-receiving material contains an entangled mixture of support fibers, first polymer chains and second polymer chains, wherein the second polymer chains cross-link the first polymer chains. A small section of the entangled mixture is shown schematically in Figure 3C, wherein a support fiber 3 is shown as being entangled with the three-dimensional network comprising the first polymer 1 cross-linked by the second polymer 2 by virtue of the amine groups 1a. Needless to say, Figure 3C does not show the full extent of the entanglement because, to avoid undue complexity, it depicts only a small region around a portion of just a single support fiber. In reality, the support fibers and the chains of the first polymer will extend a distance though the material, and would therefore intertwine with neighboring support fibers and first polymer chains to form a matrix of different fibers and polymer chains. The cross-links formed by the second polymer serve to glue the support fibers and first polymers together in the entangled matrix of fibers and polymer chains.

The entangled mixture comprising fibers of the support and the three-dimensional network of first and second polymers is such that, *without* the cross-links, the fibers, first polymer chains and second polymer chains would resemble a web of individual support fibers and polymer chains of the first and second polymers. When viewed on a microscopic scale, the non-cross-linked mixture of support fibers and polymer chains would appear as an intricate matrix of strands not unlike cooked spaghetti. However, the cross-links present within the three-dimensional network drastically alter the properties of the entangled mixture because the cross-links restrict the movement of the first and second chains in the matrix, relative to the support fibers. This restriction of movement is thought to occur because the entwined mixture of support fibers, first polymer chains and second polymer chains are knitted together by the cross-links, such that the three-dimensional network becomes anchored around the numerous fibers of the support.

As will be understood from the above description, the cross-links in the three-dimensional network do not need to prevent all movement of the support fibers, first polymer chains and second polymer chains. For example, there will generally be a degree of freedom of movement on a relatively local scale, i.e. short range movement, since the various strands of polymeric chains/support fibers will be able to 'wriggle' and bend etc. with the entangled matrix. However, the cross-links suppress long-range movement of the various components within the entangled mixture of support fibers and polymer chains because the polymer chains and the support fibers are knitted together in the matrix. Accordingly, the polymer chains and support fibers are incapable of completely escaping the dye-receiving material because the first polymer chains surrounding the support fibers are stitched/glued together by the cross-links provided by the second polymer. In essence, the cross-links secure the entanglement.

The restriction of long range movement in the entangled mass is particularly useful with respect to the first polymer because the positively-charged first polymer, which is capable of binding to dye molecules, is firmly anchored with the entangled mixture of the dye-receiving material. Therefore, dyes that are captured by the first polymer during use will also be firmly anchored by the dye-receiving material. Needless to say, this effect also applies to other components of the entangled mass that are able to capturing dyes, such as the second polymer, because these other components are similarly anchored by entanglement and cross-linking. An important advantage of the crosslinking reaction reported in the present invention is the fact that the formed cross-links are not hydrolysable even under severe conditions.

The relative arrangement of fibers, first polymer chains and second polymer chains is not particularly limited. For example, the fibers of the support can be deliberately arranged, such as being woven in place or the support fibers can be distributed randomly (e.g. the support is a nonwoven web). In either case, the intertwining first polymer chains will surround the support fibers and will be held in place by the cross-links provided by the second polymer.

The entanglement can be described in various ways. For example, the entanglement can be expressed in terms of the insolubility of the first polymer, which is based upon the concept that first polymer chains anchored within the three-dimensional network by cross-linking will not be able to dissolve when the dye-receiving material is immersed in water. Without wishing to be bound by theory, it is believed that chains of the first polymer can potentially escape the three-dimensional network by at least two mechanisms. On the one hand, first polymer chains that are not cross-linked by the second polymer will not be as securely anchored by network, and will therefore potentially be able to escape. On the other hand, it is possible, though highly unlikely, that cross-links will be chemically degraded under certain circumstances, and so a first polymer chain that has been freed of all cross-links will also have the potential to escape the dye-receiving material.

For example, insolubility of the first polymer can be expressed in terms of the following titration test, but this should not be construed as an essential feature of the present invention. More specifically, the titration requires that a pH 6.5 aqueous solution that has been obtained by immersing 50 g of the dye-receiving material in one liter of water at 70°C for 10 minutes requires ≤ 3 mmol of NaOH to raise the pH of the aqueous composition from 6.5 to 10.5 at 25°C. Preferably, the amount of NaOH required is ≤ 2.5 mmol, and more preferably ≤2 mmol. Further details of this titration test are as follows.

The sample used for titration is obtained as follows. 50g of sample is cut into pieces and placed together in one liter of deionized water at 70°C under continuous magnetic stirring for 10 minutes. After 10 minutes, the samples are removed. The wet samples are then put in a Buchner funnel and washed under vacuum filtration with 20 mL of demineralized water. After vacuum-washing of the sample, the solution collected in the vacuum flask is added to the wash solution. The volume of the wash solution is re-adjusted to the initial volume of one liter by addition of demineralized water or by evaporation (keeping the solution under stirring at 70°C).

The titration step is then conducted as follows. The wash solution is cooled to 25°C, maintained under continuous magnetic stirring and a pH-meter is placed in contact with the solution. The pH is adjusted to 6.5 by addition of NaOH (0.5M) or HCl (0.5M) if necessary. A 0.5M NaOH solution is then added dropwise to the wash solution from a volumetric burette and the volume of 0.5M NaOH required to reach pH 10.5 in the wash solution is recorded.

The quantity of NaOH can be converted to grams of solubilized polyamine per liter (g/L) by analysis with an appropriate calibration curve for the polyamine. This enables the percentage of the soluble and insoluble polyamine of the sample to be determined, provided that the initial amount of polyamine applied on the nonwoven web is known. For example, a calibration curve can be produced by preparing one liter aqueous solutions containing the polyamine at various concentrations are prepared, adjusting the pH to pH 6.5 by addition of NaOH (0.5M) or HCI (0.5M), titrating by addition of NaOH (0.5M) solution, and then quantifying the amount of NaOH required to reach pH 10.5 for each of the solutions.

This titration test is, therefore, based upon the concept that amines that have escaped the dye-receiving material during immersion in water will be protonated at pH 6.5. Accordingly, the amount of NaOH required to increase the pH from 6.5 to 10.5 will indicate the extent to which amines have escaped the dye-receiving material during immersion of the dye-receiving material in water and therefore remain in the aqueous composition after the dye-receiving material has been removed. Of course, it will be appreciated that the titration test will also take into account other substances in the aqueous composition that undergo an acid-base reaction in the pH range of 6.5 to 10.5.

For the avoidance of doubt, the physical shape and dimensions of the dye-receiving material as a whole can be varied according to the user's preference, which is a further advantage of the present invention.

### Process of Producing Dye-Receiving Materials

The process by which the dye-receiving material is produced is not particularly limited, which is a further benefit of the present invention. However, one efficient method of producing the dye-receiving material includes the steps of:
(i) sequentially or simultaneously impregnating the fiber-containing support with the first polymer and the second polymer; and
(ii) cross-linking the first polymer with the second polymer in the support to form the three-dimensional network of cross-linked first and second polymers.

The method by which the fiber-containing support is impregnated with the first and second polymers is not particularly limited. For example, the fiber-containing support can be soaked in a solution, such as an aqueous solution, of each polymer separately or a solution containing both polymers together. However, it can be preferable to impregnate the support with a solution containing both the first and second polymers, as this will help to maximize mixing between the two polymers, and therefore enhance entanglement and cross-linking.

Impregnation can also be achieved by a so-called padding technique, wherein the fiber-containing support is contacted with a solution of the first and second polymers (or separate solutions of the first and second polymer, either sequentially or simultaneously) before being passed through nip rollers. The squeezing action of the rollers helps to force the solution of first and/or second polymers deep into the fiber-containing support, such that the resulting cross-linking causes a high level of entanglement with the fibers of the support. Since the squeezing action of the rollers causes deep impregnation of the first/second polymers, then the method by which the solution of the first and/or second polymers is applied to the fiber-containing support is not particularly limited. Non-limiting examples of this contacting step include spraying the support with the polymer-containing solution(s) or immersing the support in the polymer-containing solution(s).

It can also be helpful to include a wetting agent in the impregnation solution(s) due to the generally hydrophobic nature of the synthetic fibers in the support. The amount of wetting agent used can be determined based upon the materials involved and as required by the user.

Cross-linking can be conducted by any appropriate means. In many cases, due to the close proximity of the reagents and the types of reacting functional groups involved, cross-linking occurs spontaneously by ageing. If desirable, it can be helpful to promote cross-linking by heating/curing the impregnated support so as to thermally promote cross-linking. Any other conventional way of increasing the rate of reaction can also be used to promote cross-linking, such as photochemical rate acceleration.

In addition, cross-linking can be promoted by creating an alkaline environment in the dye-receiving material. For example, this can be achieved by impregnating the support with an alkaline solution of the first and/or second polymers. An alkaline environment can assist cross-linking by a number of ways. On the one hand, and alkaline environment helps to make the amine groups of the first polymer more nucleophilic, and therefore more reactive towards the cross-linking groups of the second polymer. On other hand, the alkaline environment can help to absorb acidic byproducts of the cross-linking reaction that might otherwise retard further cross-linking. For example, the putative byproduct formed by reacting an amine group with a halohydrin group is HCl, but this would be neutralized in an alkaline environment. Any alkalinity remaining after the cross-linking reaction can be removed by, for example, washing with water, if desired.

The sequence of events described above is illustrated in Figure 3, wherein Figure 3A depicts a solution containing first polymer 1 and second polymer 2, Figure 3B depicts the support impregnated with the first and second polymers prior to cross-linking, and Figure 3C depicts the cross-linked three-dimensional network entangled with the support. As mentioned above, Figure 3 depicts only a small portion of the entangled mixture of support fibers and three-dimensional network in order to avoid undue complexity. As can be understood from Figure 3B, impregnating the support with the first and second polymers causes them to pass between and surround fibers within the support. Then, once cross-linking occurs between the second polymer 2 and the amine groups 1a of the first polymer 1, the first fibers are locked in place between and around the support fibers.

It can also be helpful to dry the impregnated support, since this will help to remove water that might remain from the impregnation step. The drying step can be conducted by exposing the impregnated support to elevated temperatures for a period of time, wherein shorter drying times are generally associated with higher temperatures. As a guide, drying can be conducted by exposing the impregnated support to temperatures of 50-150°C for 0.5-30 minutes. Drying can also be promoted by exposing the impregnated support to a vacuum during drying, wherein drying in a vacuum generally requires lower drying temperatures than when drying at ambient pressure. Of course, the drying step might itself also help to promote cross-linking. Moreover, the drying step can be conducted before, during or after the cross-linking step.

### Use of Dye-Receiving Materials

As mentioned above, the dye-receiving material of the present invention is able to retain dyes despite the fact that the support fibers do not have any particular affinity for dye compounds. In essence, it is believed that dye molecules, particularly acid dye molecules, applied to the dye-receiving material will experience an intermolecular attraction with appropriate chemical groups of the dye-receiving material, wherein the appropriate groups of the dye-receiving material will typically include the cationic groups of the first and, optionally, second polymers. Once this intermolecular attraction has taken effect, the dye molecule will be held in place because the appropriate groups of the first/second polymers are anchored to the dye-receiving material by virtue of the cross-linked entanglement described above. This is, therefore, particularly useful in the case of widely-used materials that are hydrophobic, such as polypropylene, because these hydrophobic materials would ordinarily repel hydrophilic dye compounds.

As will be appreciated from the above description, the present invention is particularly well-suited to printing and dyeing with anionic dyes (sometimes called acid dyes). As these kinds of dyes can be utilized in a large variety of printing and dyeing techniques, the present invention benefits from considerable versatility.

There is no particular limitation in terms of how dye compounds are applied to the dye-receiving material. For example, the dye-receiving material can be used in a dyeing process, such as by immersing the whole or a part of the dye-receiving medium in a composition comprising a dye compound or compounds. The versatility of the present invention means that there is no particular limitation in how this is conducted. For example, the dye-receiving substrate of the present invention can be used in a batch dyeing process (also called exhaustion dyeing), wherein non-limiting examples include loose stock dyeing (autoclave), yarn dyeing (autoclave), hank dyeing, piece dyeing in rope form (winch beck, overflow, jet, airflow), piece dyeing in open-width form (winch, beam dyeing, jig dyeing, jigger) and piece dyeing (paddle, drum) processes. The dye-receiving substrate can also be used in a continuous or semi-continuous dyeing process, wherein non-limiting examples include pad-batch, pad-roll, pad-jig, pad-steam and pad-dry processes.

Dye compounds can also be applied to the dye-receiving material using a printing technique. There is no particular limitation on how the printing is conducted. Not-limiting examples include inkjet printing, laser printing, screen printing, lithography, flexography, gravure printing, pad printing and relief printing. Further examples of ways in which dye compounds can be applied to the dye-receiving substrate include applying an ink containing the dye compounds, wherein non-limiting examples include using a pen, brush or typewriter.

A further important advantage of the dye-receiving material of the present invention is that it can be used in inkjet printing, which is a widely-known and well-understood technique that requires little capital investment. As noted above, inkjet printing substrates such as polypropylene has previously been a difficult task. However, inkjet printing is made facile with the present invention, wherein suitable dye-receiving materials can be passed through an inkjet printer of the type usually used to print on paper.

### Examples

The present invention will now be illustrated by way of experimental Examples, but these should not be interpreted as limiting the scope of the present invention.

### Example 1 - Preparation of Media

A polymer solution was prepared by mixing a polyvinylamine having an average molecular weight of 340,000 a.m.u. (wherein <10% of the amine groups are capped with formyl groups) and an epichlorohydrin modified polyamide (EMP) polymer (Giluton 1100-28N from BK Giulini) at a ratio of 80:20 by mass, diluting with deionized water so that the total solid content was 18% w/w and adjusting the pH to 10 by addition of NaOH solution 30% w/w. A wetting agent (Fluowet from Clariant) was added in an amount of 0.5% w/w to the polymer solution in order to assist wetting and impregnation of the synthetic substrate with the aqueous polymer solution.

A commercially available sheet of 15 g/m² spunbond nonwoven polypropylene (Grade WL250660, Ahlstrom) was impregnated with the above solution by size-press impregnation using a Mathis size-press at 2 bar and 2 m/min speed. The impregnated sheet was dried on a hot plate at 105°C for 1 minute and then cured in a forced air oven at 135°C or 5 minutes. The total dry mass of polymer and wetting agents applied to the fiber-containing support was 4 g/m² (i.e. the basis weight was 4 g/m²).

### Example 2 - Dyeing the Dye-Receiving Medium

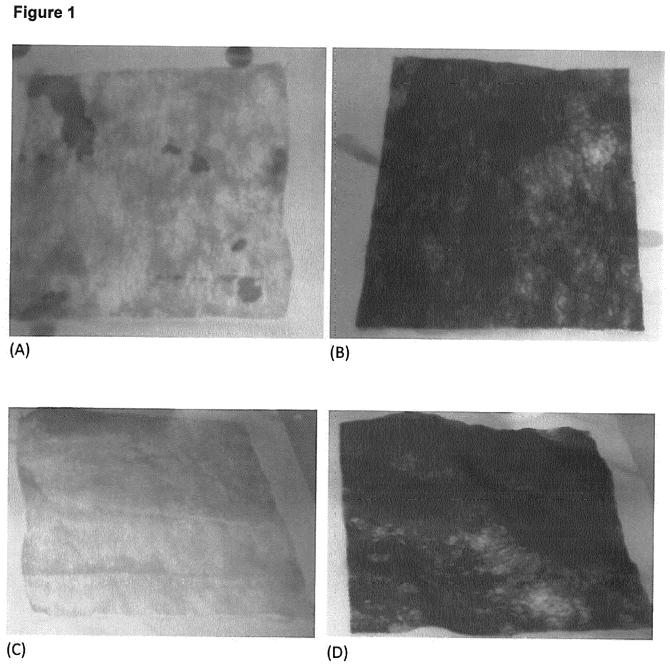

A 100 cm² sheet according to Example 1 was immersed in 150 ml of an aqueous dye solution having a dye concentration of 0.2 g/liter (Indosol Red BA P 150 from Clariant) for 1 minute at 25°C. After 1 minute, the sheet was removed from the dye solution and visually inspected (see Figure 1B). The sheet was next rinsed in 150ml of deionized water at 25°C and again visually inspected (see Figure (1D). For the purpose of comparison, the same procedure was conducted on a similar polypropylene sheet that had not been impregnated with the first and second polymers, and therefore did not have the cross-linked three-dimensional network, wherein the results are shown in Figure 1A (before washing) and Figure 1C (after washing).

As can be seen from the results illustrated in Figure 1, the dye-receiving sheet according to the present invention took up a greater amount of dye to begin with and, crucially, this dye was retained after washing. In more detail, Figure 1A shows that the untreated sheet was slightly colored after the dyeing treatment, but Figure 1B shows that the treated sheet was far more colored after the dyeing treatment. However, after washing with water, the untreated sheet retained almost no dye (see Figure 1C), but the treated sheet retained a large amount of dye even after washing (see Figure 1D).

In a follow-up experiment, dyeing was also attempted by heating the dye solution to a temperature to 70°C before immersing replica samples of the substrates used in Example 2. As before, the non-impregnated polypropylene sheet did not retain any meaningful amount of dye after washing, whereas the impregnated sheet again performed very well.

### Example 3 - Using the Dye-Receiving Medium in Inkjet Printing

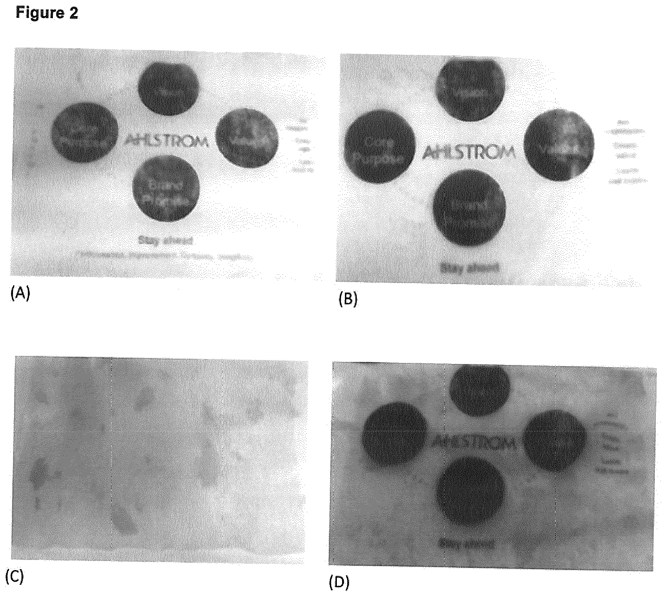

A 16 x 20 cm sheet according to Example 1 was subjected to inkjet printing using an HP Deskjet 895 Cxi office inkjet printer equipped with HP 45 (51645GE) and HP 23 (C1823GE) ink cartridges. After printing, the sheet was visually inspected (see Figure 2B), before being washed in 200 ml of deionized water for one minute at 25°C and then visually inspected (see Figure 2D). For the purpose of comparison, the same procedure was conducted on a similar polypropylene sheet that had not been impregnated with the first and second polymers, wherein the results are shown in Figure 2A (before washing) and Figure 2C (after washing).

As can be seen from the results illustrated in Figure 2, the dye-receiving sheet according to the present invention retained the printing image after washing. In comparison, the untreated sheet completely lost the image after washing.

To quantify the amount of dye lost when washing the printed sheets, the color of the wash water was quantified by measuring its absorbance with a UV-Vis Spectrophotometer (Perkin Elmer Lambda 20). Absorbance spectra was performed over the range of 300-800 nm and Absorbance value was taken at the maximum of the Absorbance curve (Xmax = 562 nm). The water used to wash the control sample was found to have an absorbance of 0.2637 at 562 nm, whereas the water used to wash the treated media had an absorbance of just 0.0536 at 562 nm.

Using the Beer-Lambert Law (linear relationship of absorbance with the concentration in the solution: c = A/[ε x l]; where c = dye concentration, A = absorbance, ε = molar absorption coefficient, l = optical length), the relative amount of dye lost during washing was quantified. As a reference value, the untreated sheet was nominally said to lose 100% of the inkjet into to the wash water. Taking this as a reference value, the treated sheet (in accordance with the present invention) was shown to retain 80% of the ink applied using the non-optimized printing conditions.

### Example 4 - Dyeing the Dye-Receiving Medium

Various nonwoven sheets (shown in Table 1) were impregnated with a solution containing a polyvinylamine having an average molecular weight of 340,000 (wherein <10 % of the amine groups are capped with formyl groups) and an epichlorohydrin modified polyamide polymer (Giluton 1100-28N). The polymer solution was prepared by mixing the polymers, diluting with (deionized) water and adjusting the pH to pH 10 by addition of NaOH (30% w/w aqueous solution). The ratio of the polymers was 95:5, such that the ratio of epichlorohydrin functional groups to (N-H) functional groups was 0.0079. A wetting agent (FLUOWET, Clariant, Switzerland) was added to the impregnating solution at a concentration of 0.5% w/w in order to assist in wetting the hydrophobic surfaces.

The supports were commercially available samples of polypropylene (PP) spunbond (Grade 0050 70g/m², Fiberweb, USA and reference WL25026 23g/m² from Ahlstrom, USA), polylactic acid spunbond (reference CD50105M 55g/m² from Ahlstrom, UK), and a polyester needlepunch (reference BRN094150C 150g/m² from Ahlstrom, France). Impregnation of the nonwoven sheets was conducted by a padding technique (Mathis size-press at 1.8 bar of pressure), wherein the total amount of the first and second polymers added is shown in Table 1. The treated sheets were then dried on a hot plate at 110°C for 2 minutes and subsequently cured in a forced air oven at 135°C for 5 minutes. The samples were then analysed based upon their ability to pick up dyes and then retain the dyes during a washing procedure according to the following methods:
Dye Pick-Up (DPU):- A 250 x 125 mm (312.5 cm²) sheet was placed in one liter of a vigorously agitated aqueous dye solution heated to 70°C, wherein the dye solution comprised Direct Red Dye (Indosol Red BA P 150 from Clariant) at a concentration of 200 mg/liter. The sample was then removed after 3 minutes and a 10 ml aliquot was taken from the dye solution and diluted to a total volume of 200ml in readiness for measurement. The absorbance of the diluted aliquot was measured at the maximum absorbency wavelength of Indosol Red BA P 150 (526 nm) using a calibrated Perkin Elmer Lambda 20 spectrophotometer.

Using a standard calibration curve correlating the absorbance at 526 nm to the concentration of dye in solution (Beer-Lambert Law *c*=*A* / *[ε x l]*; wherein c = dye concentration, A = absorbance, ε = molar absorption coefficient, and l = optical path length), the absorbance obtained experimentally was converted into the dye concentration in solution (mg/L). The Dye pick-up (DPU) value is the difference between the concentration of dye measured before and after the immersion of the nonwoven sample in the solution. The DPU is considered as the amount of dye removed from the solution and adsorbed by the nonwoven sample and is expressed in mg of dye per sample sheet (area of 312.5 cm² for all samples tested). The DPU values are reported as the average value obtained by the testing of three separate sheets. DPU of samples that have not been subjected to the Washing Protocol (see below) are noted as DPU₀ and samples that have been subjected to the Washing Protocol are noted as DPU_{w}.

Washing protocol:- In order to determine if the DPU value is affected by pre-washing the sample, the samples underwent the following washing protocol. The sample (250 x 125 mm) was placed in 1 liter of water at 70°C. The sample was maintained in the bath under vigorous stirring for 10 minutes, before being removed, hung up for 10 minutes to drain and dried on hot plate for 5 minutes at 95°C.

As shown by the results present in Table 1, the present invention provides excellent results in terms of DPU for various supports and, moreover, the dye was retained to a significant extent even after washing.

**Table 1**

| Sample | Support composition | Amount of First and second Polymers (g/m²) | DPU₀ (mg) | DPU_{w} (mg) |
|---|---|---|---|---|
| 1 | 70g/m² PP spunbond (0050) | 9.0 | 125 | 120 |
| 2 | 23g/m² PP spunbond (WL25026) | 3.5 | 77 | 78 |
| 3 | 55g/m² PLA spunbond (CD50105M) | 6.0 | 79 | 84 |
| 4 | 150g/m² PET needlepunch (BRN094150C) | 9.2 | 144 | 139 |

As will be understood from the preceding description of the present invention and the illustrative experimental examples, the present invention can be described by reference to the following embodiments:
1. A dye-receiving material comprising:
   a support comprising synthetic fibers; and
   a three-dimensional network entangled with at least some of the fibers contained in the support, the three-dimensional network comprising a first polymer that is cross-linked by a second polymer; wherein:
      the first polymer is a polyamine comprising primary amine groups, the first polymer being cationic and water soluble; and
      the second polymer is a water soluble polymer that is different from the first polymer, the second polymer containing repeating units comprising halohydrin and/or epoxide groups that are capable of forming covalent cross-links with the primary amine groups of the first polymer.
2. The dye-receiving material according to embodiment 1, wherein titration of a pH 6.5 aqueous composition that has been obtained by immersing 50 g of the dye-receiving material in one liter of water at 70°C for 10 minutes requires ≤ 3 mmol of NaOH to raise the pH of the aqueous composition from 6.5 to 10.5 at 25°C.
3. The dye-receiving material according to embodiment 1 or embodiment 2, wherein the synthetic fibers comprise one or more of polypropylene, polyethylene, polylactic acid, polyethylene terephthalate and a glass.
4. The dye-receiving material according to any preceding embodiment, wherein the halohydrin groups of the second polymer are chlorohydrin groups according to the following Formula (I): 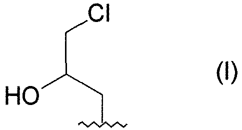
5. The dye-receiving material according to any preceding embodiment, wherein the second polymer contains quaternary ammonium groups.
6. The dye-receiving material according to embodiment, wherein the second polymer is a diallyl(3-chloro-2-hydroxypropyl)amine hydrochloride-diallyldimethylammonium chloride copolymer having the repeating units illustrated in following Formula (II): 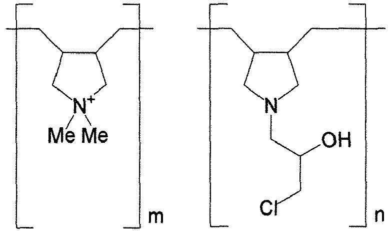 wherein the ratio of m:n in the polymer is in the range of from 1:9 to 9:1.
7. The dye-receiving material according to any preceding embodiment, wherein the number average molecular weight of the second polymer in isolation is at least 1,000, preferably higher than 20,000.
8. The dye-receiving material according any preceding embodiment, wherein the first polymer is at least one of poly(allyl amine), poly(ethylene imine), partially hydrolyzed poly(vinylformamide), polyvinylamine, chitosan and copolymers of these polyamines with any type of monomers.
9. The dye-receiving material according to any preceding embodiment, wherein the number average molecular weight of the first polymer in isolation is at least 20,000, preferably higher than 100,000.
10. The dye-receiving material according to any preceding embodiment, wherein the first polymer comprises side-chains having quaternary ammonium groups.
11. The dye-receiving material according to any preceding embodiment, wherein the first polymer is a graft polymer obtainable by reacting the first polymer with glicidyl trimethylammonium chloride, 3-chloro-2-hydroxypropyl trimethylammonium chloride, or both glicidyl trimethylammonium chloride and 3-chloro-2-hydroxypropyl trimethylammonium chloride.
12. The dye-receiving material according to any preceding embodiment, wherein the ratio by mass of the first polymer to the second polymer in the dye-receiving substrate is in the range of from 99:1 to 20:80, preferably from 97:3 to 50:50.
13. The dye-receiving material according to any preceding embodiment, wherein the dye-receiving material is provided in the form of a sheet and the basis weight of the three-dimensional network is from 0.5 to 30 g/m², preferably from 1.0 and 20 g/m².
14. The dye-receiving material according to any preceding embodiment, wherein the support is a polyolefin nonwoven support, preferably wherein the polyolefin is polyethylene, polypropylene, or a mixture thereof.
15. The dye-receiving material according to any preceding embodiment, wherein:
   the support is a sheet comprising polypropylene fibers;
   the first polymer is a polyvinylamine having an average molecular weight of from 100,000 to 700,000;
   the second polymer is a polyamide having epihalohydrin groups, the second polymer having an average molecular weight of from 5,000 to 75,000; and
   the ratio by mass of the first polymer to the second polymer is in the range of from 98:2 and 60:40.
16. A process of producing dye-receiving material as defined in any preceding embodiment, comprising:
   (i) sequentially or simultaneously impregnating the fiber-containing support with the first polymer and the second polymer; and
   (ii) drying and crosslinking the first polymer with the second polymer in the support to form the three-dimensional network of cross-linked first and second polymer.
17. The dye-receiving material according to any one of embodiments 1-15, which is obtainable by a process as defined in embodiment 16.
18. Use of a dye-receiving material as defined in any one of embodiments 1-15 or 17 as a printing medium in inkjet printing.
19. Use of a dye-receiving material as defined in any one of embodiments 1-15 or 17 in a dyeing process.

## Claims

1. A dye-receiving material comprising:
a support comprising synthetic fibers; and
a three-dimensional network entangled with at least some of the fibers contained in the support, the three-dimensional network comprising a first polymer that is cross-linked by a second polymer; wherein:
the first polymer is a polyamine comprising primary amine groups, the first polymer being cationic and water soluble; and
the second polymer is a water soluble polymer that is different from the first polymer, the second polymer containing repeating units comprising halohydrin and/or epoxide groups that are capable of forming covalent cross-links with the primary amine groups of the first polymer.

2. The dye-receiving material according to Claim 1, wherein titration of a pH 6.5 aqueous solution that has been obtained by immersing 50 g of the dye-receiving material in one liter of water at 70°C for 10 minutes requires ≤ 3 mmol of NaOH to raise the pH of the aqueous composition from 6.5 to 10.5 at 25°C.

3. The dye-receiving material according to Claim 1 or Claim 2, wherein the synthetic fibers comprise one or more of polypropylene, polyethylene, polylactic acid, polyethylene terephthalate and a glass.

4. The dye-receiving material according to any preceding claim, wherein the halohydrin groups of the second polymer are chlorohydrin groups according to the following Formula (I):

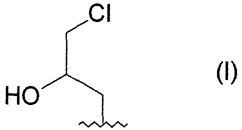

5. The dye-receiving material according to any preceding claim, wherein the second polymer contains quaternary ammonium groups.

6. The dye-receiving material according to Claim 5, wherein the second polymer is a diallyl(3-chloro-2-hydroxypropyl)amine hydrochloride-diallyldimethylammonium chloride copolymer having the repeating units illustrated in following Formula (II): 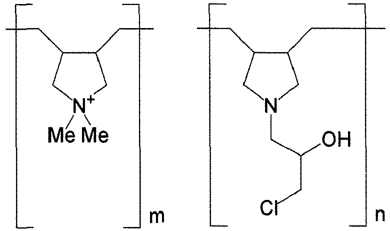 wherein the ratio of m:n in the polymer is in the range of from 1:9 to 9:1.

7. The dye-receiving material according to any preceding claim, wherein the number average molecular weight of the second polymer in isolation is at least 1,000, preferably higher than 20,000.

8. The dye-receiving material according any preceding claim, wherein the first polymer is at least one of poly(allyl amine), poly(ethylene imine), partially hydrolyzed poly(vinylformamide), polyvinylamine, chitosan and copolymers of these polyamines with other monomers.

9. The dye-receiving material according to any preceding claim, wherein the number average molecular weight of the first polymer in isolation is at least 20,000, preferably higher than 100,000.

10. The dye-receiving material according to any preceding claim, wherein the first polymer comprises side-chains having quaternary ammonium groups.

11. The dye-receiving material according to any preceding claim, wherein the first polymer is a graft polymer obtainable by reacting the first polymer with glicidyl trimethylammonium chloride, 3-chloro-2-hydroxypropyl trimethylammonium chloride or a combination thereof.

12. The dye-receiving material according to any preceding claim, wherein the ratio by mass of the first polymer to the second polymer in the dye-receiving substrate is in the range of from 99:1 to 20:80, preferably from 97:3 to 50:50.

13. The dye-receiving material according to any preceding claim, wherein the dye-receiving material is provided in the form of a sheet and the basis weight of the three-dimensional network is from 0.5 to 30 g/m², preferably from 1.0 and 20 g/m².

14. The dye-receiving material according to any preceding claim, wherein the support is a polyolefin nonwoven support.

15. A process of producing dye-receiving material as defined in any preceding claim, comprising:
(i) sequentially or simultaneously impregnating the fiber-containing support with the first polymer and the second polymer; and
(ii) drying and crosslinking the first polymer with the second polymer in the support to form the three-dimensional network of cross-linked first and second polymer.

16. The dye-receiving material according to any one Claims 1-14, which is obtainable by a process as defined in Claim 15.

17. Use of a dye-receiving material as defined in any one of Claim 1-14 or 16 as a printing medium in inkjet printing.

18. Use of a dye-receiving material as defined in any one of Claim 1-14 or 16 in a dyeing process.

## Patentansprüche

1. Farbstoffaufnehmendes Material, umfassend:
einen Träger, der synthetische Fasern umfasst; und
ein dreidimensionales Netzwerk, das mit mindestens einigen der im Träger enthaltenen Fasern verwickelt ist,
wobei das dreidimensionale Netzwerk ein erstes Polymer umfasst, das durch ein zweites Polymer vernetzt ist; wobei:
das erste Polymer ein Polyamin ist, das primäre Amingruppen umfasst, wobei das erste Polymer kationisch und wasserlöslich ist; und
das zweite Polymer ein wasserlösliches Polymer ist, das sich vom ersten Polymer unterscheidet, wobei das zweite Polymer Wiederholungseinheiten enthält, die Halohydrin- und/oder Epoxidgruppen umfassen, die in der Lage sind, kovalente Vernetzungen mit den primären Amingruppen des ersten Polymers zu bilden.

2. Farbstoffaufnehmendes Material gemäß Anspruch 1, wobei die Titration einer wässrigen Lösung mit einem pH-Wert von 6,5, die durch 10-minütiges Eintauchen von 50 g des farbstoffaufnehmenden Materials in einen Liter Wasser bei 70°C erhalten wurde, ≤ 3 mmol NaOH erfordert, um den pH-Wert der wässrigen Zusammensetzung bei 25°C von 6,5 auf 10,5 zu erhöhen.

3. Farbstoffaufnehmendes Material gemäß Anspruch 1 oder Anspruch 2, wobei die synthetischen Fasern eines oder mehrere von Polypropylen, Polyethylen, Polymilchsäure, Polyethylenterephthalat und einem Glas umfassen.

4. Farbstoffaufnehmendes Material gemäß einem der vorhergehenden Ansprüche, wobei die Halohydringruppen des zweiten Polymers Chlorhydringruppen gemäß der folgenden Formel (I) sind:

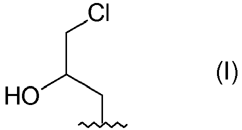

5. Farbstoffaufnehmendes Material gemäß einem der vorhergehenden Ansprüche, wobei das zweite Polymer quaternäre Ammoniumgruppen enthält.

6. Farbstoffaufnehmendes Material gemäß Anspruch 5, wobei das zweite Polymer ein Diallyl(3-chlor-2-hydroxypropyl) aminhydrochlorid-Diallyldimethylammoniumchlorid-Copolymer mit den Wiederholungseinheiten der folgenden Formel (II) ist: 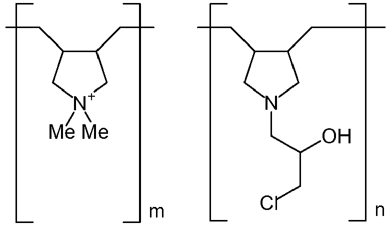 worin das Verhältnis von m:n im Polymer im Bereich von 1:9 bis 9:1 liegt.

7. Farbstoffaufnehmendes Material gemäß einem der vorhergehenden Ansprüche, wobei das zahlengemittelte Molekulargewicht des zweiten Polymers für sich genommen mindestens 1.000, vorzugsweise mehr als 20.000 beträgt.

8. Farbstoffaufnehmendes Material gemäß einem der vorhergehenden Ansprüche, wobei das erste Polymer mindestens eines von Poly(allylamin), Poly(ethylenimin), teilweise hydrolysiertem Poly(vinylformamid), Polyvinylamin, Chitosan und Copolymeren dieser Polyamine mit anderen Monomeren ist.

9. Farbstoffaufnehmendes Material gemäß einem der vorhergehenden Ansprüche, wobei das zahlengemittelte Molekulargewicht des ersten Polymers für sich genommen mindestens 20.000, vorzugsweise mehr als 100.000 beträgt.

10. Farbstoffaufnehmendes Material gemäß einem der vorhergehenden Ansprüche, wobei das erste Polymer Seitenketten mit quartären Ammoniumgruppen umfasst.

11. Farbstoffaufnehmendes Material gemäß einem der vorhergehenden Ansprüche, wobei das erste Polymer ein Pfropfpolymer ist, das durch Umsetzen des ersten Polymers mit Glycidyltrimethylammoniumchlorid, 3-Chlor-2-hydroxypropyltrimethylammoniumchlorid oder einer Kombination davon erhältlich ist.

12. Farbstoffaufnehmendes Material gemäß einem der vorhergehenden Ansprüche, wobei das Massenverhältnis des ersten Polymers zum zweiten Polymer im Farbstoffaufnehmenden Substrat im Bereich von 99:1 bis 20:80, vorzugsweise von 97:3 bis 50:50 liegt.

13. Farbstoffaufnehmendes Material gemäß einem der vorhergehenden Ansprüche, wobei das farbstoffaufnehmende Material in Form einer Folie bereitgestellt ist und das Basisgewicht des dreidimensionalen Netzwerks 0,5 bis 30 g/m², vorzugsweise 1,0 bis 20 g/m² beträgt.

14. Farbstoffaufnehmendes Material gemäß einem der vorhergehenden Ansprüche, wobei der Träger ein Polyolefin-Vliesstoffträger ist.

15. Verfahren zur Herstellung eines Farbstoffaufnehmenden Materials gemäß einem der vorhergehenden Ansprüche, umfassend:
(i) aufeinanderfolgendes oder gleichzeitiges Imprägnieren des faserhaltigen Trägers mit dem ersten Polymer und dem zweiten Polymer; und
(ii) Trocknen und Vernetzen des ersten Polymers mit dem zweiten Polymer im Träger, um das dreidimensionale Netzwerk aus vernetztem erstem und zweitem Polymer zu bilden.

16. Farbstoffaufnehmendes Material gemäß einem der Ansprüche 1 bis 14, das durch ein Verfahren erhältlich ist, wie es in Anspruch 15 definiert ist.

17. Verwendung eines farbstoffaufnehmenden Materials gemäß einem der Ansprüche 1-14 oder 16 als Druckmedium beim Tintenstrahldrucken.

18. Verwendung eines farbstoffaufnehmenden Materials gemäß einem der Ansprüche 1-14 oder 16 in einem Färbeverfahren.

## Revendications

1. Matériau de réception de colorant comprenant :
un support comprenant des fibres synthétiques ; et
un réseau tridimensionnel enchevêtré avec au moins certaines des fibres contenues dans le support, le réseau tridimensionnel comprenant un premier polymère qui est réticulé par un second polymère ; dans lequel :
le premier polymère est une polyamine comprenant des groupes amine primaire, le premier polymère étant cationique et hydrosoluble ; et
le second polymère est un polymère hydrosoluble qui est différent du premier polymère, le second polymère contenant des motifs répétitifs comprenant des groupes halohydrine et/ou époxyde qui sont capables de former des réticulations covalentes avec les groupes amine primaire du premier polymère.

2. Matériau de réception de colorant selon la revendication 1, dans lequel le titrage d'une solution aqueuse à pH 6,5 qui a été obtenue par l'immersion de 50 g du matériau de réception de colorant dans un litre d'eau à 70 °C pendant 10 minutes nécessite ≤ 3 mmoles de NaOH pour augmenter le pH de la composition aqueuse de 6,5 à 10,5 à 25 °C.

3. Matériau de réception de colorant selon la revendication 1 ou la revendication 2, dans lequel les fibres synthétiques comprennent un ou plusieurs parmi un polypropylène, un polyéthylène, un polyacide lactique, un polytéréphtalate d'éthylène et un verre.

4. Matériau de réception de colorant selon l'une quelconque des revendications précédentes, dans lequel les groupes halohydrine du second polymère sont des groupes chlorohydrine selon la formule (I) suivante :

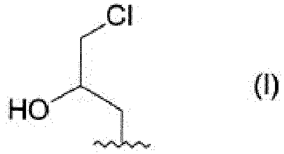

5. Matériau de réception de colorant selon l'une quelconque des revendications précédentes, dans lequel le second polymère contient des groupes ammonium quaternaire.

6. Matériau de réception de colorant selon la revendication 5, dans lequel le second polymère est un copolymère de chlorhydrate de diallyl(3-chloro-2-hydroxypropyl)amine-chlorure de diallyldiméthylammonium ayant les motifs répétitifs illustrés dans la formule (II) suivante : 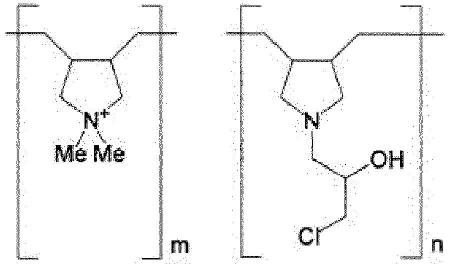 dans laquelle le rapport m : n dans le polymère est situé dans la plage allant de 1 : 9 à 9 : 1.

7. Matériau de réception de colorant selon l'une quelconque des revendications précédentes, dans lequel le poids moléculaire moyen en nombre du second polymère en isolement est au moins de 1000, de préférence supérieur à 20 000.

8. Matériau de réception de colorant selon l'une quelconque des revendications précédentes, dans lequel le premier polymère est au moins l'un parmi une poly(allyl amine), une poly(éthylène imine), un poly(vinylformamide) partiellement hydrolysé, une polyvinylamine, un chitosane et les copolymères de ces polyamines avec d'autres monomères.

9. Matériau de réception de colorant selon l'une quelconque des revendications précédentes, dans lequel le poids moléculaire moyen en nombre du premier polymère en isolement est au moins de 20 000, de préférence supérieur à 100 000.

10. Matériau de réception de colorant selon l'une quelconque des revendications précédentes, dans lequel le premier polymère comprend des chaînes latérales ayant des groupes ammonium quaternaire.

11. Matériau de réception de colorant selon l'une quelconque des revendications précédentes, dans lequel le premier polymère est un polymère greffé pouvant être obtenu par la réaction du premier polymère avec le chlorure de glycidyl triméthylammonium, le chlorure de 3-chloro-2-hydroxypropyl triméthylammonium ou une combinaison de ceux-ci.

12. Matériau de réception de colorant selon l'une quelconque des revendications précédentes, dans lequel le rapport en masse entre le premier polymère et le second polymère dans le substrat de réception de colorant est situé dans la plage allant de 99 : 1 à 20 : 80, de préférence de 97 : 3 à 50 : 50.

13. Matériau de réception de colorant selon l'une quelconque des revendications précédentes, dans lequel le matériau de réception de colorant est fourni sous la forme d'une feuille et le grammage du réseau tridimensionnel va de 0,5 à 30 g/m², de préférence de 1,0 à 20 g/m².

14. Matériau de réception de colorant selon l'une quelconque des revendications précédentes, dans lequel le support est un support non tissé de polyoléfine.

15. Procédé de production d'un matériau de réception de colorant tel que défini dans l'une quelconque des revendications précédentes, comprenant :
(i) l'imprégnation de manière séquentielle ou simultanée du support contenant des fibres avec le premier polymère et le second polymère ; et
(ii) le séchage et la réticulation du premier polymère avec le second polymère dans le support pour former le réseau tridimensionnel de premier et second polymères réticulés.

16. Matériau de réception de colorant selon l'une quelconque des revendications 1 à 14, qui peut être obtenu par un procédé tel que défini dans la revendication 15.

17. Utilisation d'un matériau de réception de colorant tel que défini dans l'une quelconque des revendications 1 à 14 ou 16 comme support d'impression en impression par jet d'encre.

18. Utilisation d'un matériau de réception de colorant tel que défini dans l'une quelconque des revendications 1 à 14 ou 16 dans un procédé de coloration.
